# EUROPEAN PATENT SPECIFICATION

(11) **EP 0 754 272 B1**
(45) Date of publication and mention of the grant of the patent: **23.09.1998**
(21) Application number: 94911809.5
(22) Date of filing: 04.04.1994
(51) Int. Cl.: F04B 39/02, F16N 7/36

(54) **OIL PUMP FOR A VARIABLE SPEED HERMETIC COMPRESSOR**
ÖLPUMPE FÜR EINEN HERMETISCHEN KOMPRESSOR VARIABLER GESCHWINDIGKEIT
POMPE A HUILE POUR COMPRESSEUR HERMETIQUE A VITESSE VARIABLE

(43) Date of publication of application: 22.01.1997
(73) Proprietor: EMPRESA BRASILEIRA DE COMPRESSORES S/A - EMBRACO, 89219-901 Joinville, SC (BR)
(72) Inventor: KRUEGER, Manfred, 89219-901-Joinville, SC (BR); LILIE, Dietmar, Erich, Bernhard, 89219-901 Joinville, SC (BR)
(74) Representative: Geyer, Werner, Dr.-Ing.
(86) International application number: PCT/BR94/00009
(87) International publication number: WO 95/27138

(56) References cited:
- EP-A- 0 433 212
- FR-A- 2 204 233
- US-A- 3 103 180
- US-A- 4 478 559
- PATENT ABSTRACTS OF JAPAN vol. 12, no. 471 (M-773) 9 December 1988 & JP,A,63 192 983 (MITSUBISHI ELECTRIC CORP.) 10 August 1988

## Description

### Field of the Invention .

The present invention refers to an oil pump in variable speed hermetic compressors of the reciprocating type, particularly those presenting a vertical shaft and used in refrigerators and freezers.

### Background of the Invention

These appliances require that their respective hermetic compressors supply the exact refrigerating capacity, necessary to remove the internal heat from the medium to be refrigerated. As the refrigerating capacity is proportional to the flow of refrigerant mass pumped by the compressor, a variation of the refrigerating capacity implies in a variation of the mass flow pumped by the compressor. A technique of continuously obtaining said variation in the mass flow is by varying the motor speed.

There are studies indicating that the variable speed compressors need an operative range from 15Hz to 100Hz, i.e., between 900 and 6000 rpm, in order to achieve a good refrigerating performance. Such speed variation affects the mechanical operation of the compressor, specially the operation of the oil pump, which is in charge of conducting the oil to the bearings of the compressor mechanism and other regions in need of lubrication, such as the connecting rod and piston. The centrifugal pumps are the oil pumping mechanisms most used in hermetic compressors, both for their low cost and adequate operation in 3000 rpm up to 3600 rpm rotations, which result from the frequency of the electrical network. Nevertheless, such mechanisms become inoperative in low rotations.

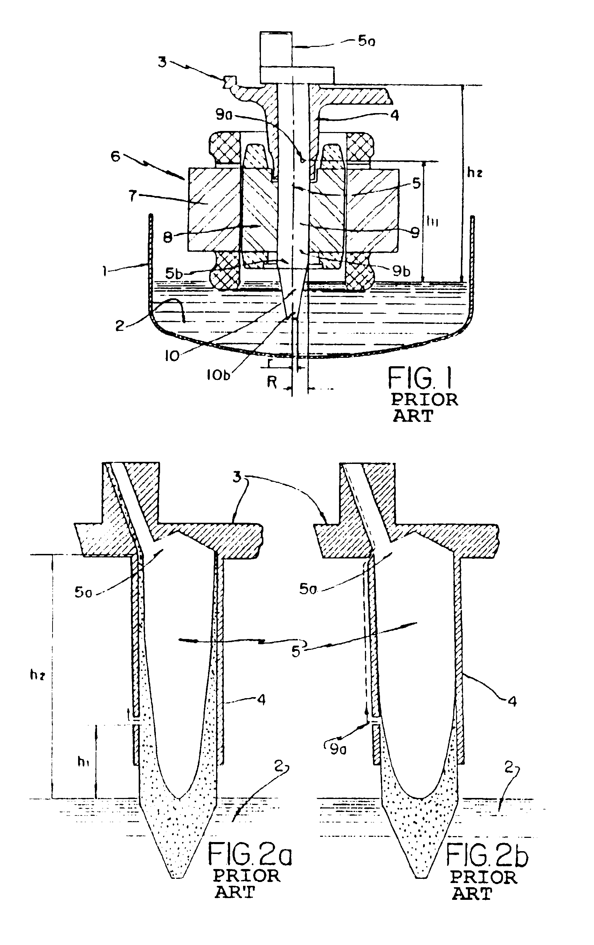

Conventional oil pumps of the centrifugal type, such as the one illustrated in figure 1 and presently in use, are not capable of pumping the oil to the bearings when the compressor needs to work at low speeds.

The operative limitations of the centrifugal pump are related to the difference between its larger radius (R) and its smaller radius (r), as it can be seen in the equation below, which governs the behavior of centrifugal pump:${\text{ω = [(2.g.h) / (R}}^{\text{2}} {\text{- r}}^{\text{2}} {\text{)]}}^{\text{1/2}}$ where "h" is the required pumping height, from the oil level up to the bearings; "g" is the gravitational constant; "R" is the larger radius of the pump; "r" is the smaller radius and "ω" is the angular speed (rd/sec).

The search for an increase in the oil pumping efficiency in such compressors by simply increasing the larger radius (R) of the pump is unfeasible, because such increase, which is necessarily substantial to achieve the desired pumping, also affects the external diameter of the compressor shaft and, consequently, all the manufacturing process of the compressor and the performance thereof, since it causes greater losses due to friction. It should be observed that small diameter alterations are not enough to achieve the necessary degree of centrifugal pumping in rotations close to or lower than 900 rpm, as it occurs in the EP0433212 solution which presents a centrifugal pump including a pair of opposite vertical slots in the form of as axial grooves provided on the internal surface of the rotor along their extension until the upper end of said rotor.

Conventional centrifugal pumps,which present a vertical or a horizontal shaft and which are widely used in hermetic compressors, as evidenced by the patent documents US 4,478,559; US 4,569,639; DT 209,877 and FR 2,492,471. Nevertheless, said centrifugal pumps do not work, or work inefficiently, at rotations lower that about 900 rpm.

The patent document US 4,097,185 describes a centrifugal pump, which operates by stages and through the which the whirl of oil at the bottom of the compressor can be reduced. A lower cavity in said pump allows the oil intake to the pump and its smaller radius (r) is a function of the desired oil flow.As this smaller radius (r) increases, the performance of the pump is reduced.

Other forms of centrifugal pumps are described in the patent documents DT 209,936 and DT 2,502,567, which use a blade, that is press fitted into the shaft and that serves as an impelling means to the oil.

The patent FR 2,204,233 describes a conventional centrifugal pump, which is mounted to an eccentric shaft of a compressor, in which the pump mechanism is disposed at the lower part of the compressor body, whereas the motor is disposed at the upper part. This disposition allows the oil to be pumped in slightly lower rotations, due to a reduction in the required pumping height. Nevertheless, the minimum rotation values still remain much higher than the desired minimum values (about 900 rpm).

Another solution for oil pumping used in horizontal shaft compressors presents an extension provided at the shaft end in the form of a tubular curved portion, with its upper end attached to the stator of the motor, whereas its free end is immersed in the lubricant oil sump of the compressor.

This tubular curved portion lodges a pump rotor, defined by a coiled spring having overlapping coils, with an upper end connected to the shaft end of the compressor, in order to rotate therewith, and a conical lower end, immersed in the lubricant oil. Although this construction provides helical tubes to conduct the oil, the pumping of said oil to the eccentric shaft and, consequently, to the other parts of the compressor requiring lubrication, is made by action of the centrifugal force, as in the conventional vertical shaft compressors provided with an open conical free end, in order to allow this type of pumping. This solution does not present a good efficiency in low rotations, either, besides the fact that it can only be rotations, either, besides the fact that it can only be used in horizontal shaft compressors.

In another solution, described in a copending patent application of the same applicant, the increase in the pumping efficiency is achieved through a pump rotor, having ascending helical grooves, which are superficially provided along a portion of the longitudinal extension of said rotor. This solution, though presenting an efficient lubrication in rotations (600 rpm) lower than those reached with conventional oil pumps, presents its pumping effect achieved by mechanically dragging the oil along the helical grooves of the pump rotor.

### Disclosure of the Invention

Thus, it is an object of the present invention to provide an oil pump of centrifugal effect for variable speed reciprocating hermetic compressors of vertical shaft, in which the pumping performance is similar to that obtained with pumps of mechanical dragging, i.e., for rotations about 600 rpm.

A second object of the present invention is to provide an oil pump as mentioned above, whose pumping capacity is increased, without redimensioning the shaft and cylinder block components.

A third object of the present invention is to provide an oil pump of simple manufacture and assembly.

A fourth object of the present invention is to provide an oil pump that does not generate oil whirl in the sump of the compressor, as it occurs with some conventional centrifugal oil pumps.

These and other objectives and advantages are attained from an oil pump for a variable speed hermetic compressor of the type including: a hermetic shell, which defines a lubricant oil sump at its bottom and which lodges therewithin a cylinder block, which supports a vertical eccentric shaft, whereto is mounted the rotor of an electric motor, the eccentric shaft being provided with at least one oil channel, having a lower end in fluid communication with a lower end of the eccentric shaft and an upper end opened to the external part of the upper median portion of the eccentric shaft, at the region covered by the supporting bearing.

The oil pump of the present invention further comprises: at least one oil conducting channel, which is machined to the stator body of the electric motor, and which presents a lower end opening for receiving the oil centrifuged by the pump rotor, and an upper end opening for oil discharge to said oil channel, said oil conducting channel having at least the part of its length, that includes the upper end opening, radially spaced in relation to the eccentric shaft by a distance that is larger than the radius of said eccentric shaft; a stationary oil collecting means, which is attached to the cylinder block and provided with an annular region for receiving all the oil coming from the upper end opening of each oil conducting channel; and at least one lubricant oil feeding means that discharges oil to the oil channel.

The oil pump as defined above presents an adequate pumping capacity for rotations around 600 rpm, but it can also be used at rotations above 6000 rpm, without impairing its operation and allowing its application in compressors mounted in the conventional manner, i.e., with the motor at the lower part of the body.

### Description of the Invention

The invention will be described below, with reference to the attached drawings, in which:
Fig. 1 illustrates a prior art oil pump, in a longitudinal diametral section view, mounted inside a hermetic compressor and presenting the dimensions h₁, h₂, R and r;
Figures 2a and 2b illustrate, respectively, an enlarged view of a prior art oil pump, during the oil pumping at a normal angular speed (2a) and at a reduced speed (2b);
Figure 3 illustrates, in a longitudinal view, the inside of a hermetic compressor with an oil pump of the present invention;

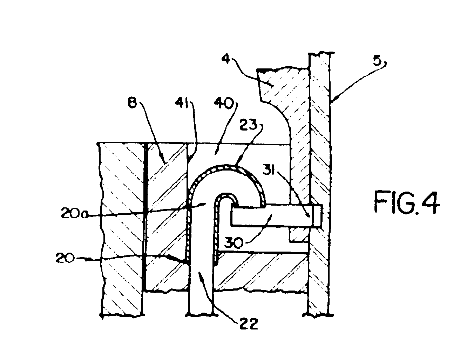

Figure 4 is an enlarged view, illustrating the region where the oil passes from the rotor conducting channel to the oil collecting means; and
Figure 5 is a view similar to that of figure 3, but illustrating another embodiment of the oil pump of the present invention.

### Best Mode of Carrying Out the Invention

According to the figures described above, a variable speed hermetic compressor of vertical shaft comprises: a hermetic shell 1, defining a lubricant oil sump 2 at its bottom and lodging therewithin: a cylinder block 3, incorporating a bearing 4 for supporting a vertical eccentric shaft 5, provided with an upper end 5a and a lower end 5b, and with an electric motor 6, having a stator 7, attached to the cylinder block 3 and a rotor 8, attached to a portion of the eccentric shaft 5 located below the bearing 4 and defining an eccentric shaft-rotor assembly, said eccentric shaft 5 being provided with at least one oil channel 9, having a lower end 9b opened to the lower end 5b of the eccentric shaft 5 and an upper end 9a opened to the external part of the upper median portion of the eccentric shaft 5 at the region of the bearing 4, said eccentric shaft 5 having fitted at its lower end 5b a pump rotor 10, whose lower end 10b is immersed in the oil mass provided in the sump 2.

In these compressors, as illustrated in figures 2a and 2b, the lubrication of the piston and other components is made through centrifugation, during the rotation of the eccentric shaft-rotor assembly, said rotation being about 3000-3600 rpm during the normal operation of the compressor.

Nevertheless, in low rotations, usually lower than 2000 rpm, the lubrication of the components becomes marginal, or occasionally does not exist at all, since the oil column formed by centrifugal effect inside the oil channel 9 no longer reaches the upper end 9a of said oil channel 9.

In such compressors, the efficiency of the oil pump is a function of the relation between its smaller diameter (radius r), immersed in the sump 2, and its larger diameter (radius R). The closest said values, less will be the lubrication force of said oil pump, as already mentioned at the beginning of this report.

According to the present invention, the increase of the pumping capacity by using centrifugal oil pumps is achieved with an increase of the difference between said smaller radius r, relative to the opening of an oil inlet lower nozzle, defined at the lower end 10b of the pump rotor 10 and a larger radius R, of maximum spacing from the geometric axis of the oil pump. Said larger radius R is obtained by machining at least one ascending oil conducting channel 20 in the body of the rotor 8, communicating the oil intake lower nozzle 10b of the pump rotor 10 with a stationary oil collecting means 30, provided with a feeding means 31 and disposed at a region of the eccentric shaft-rotor assembly located below the upper end 9a of the oil channel 9 of said eccentric shaft 5, through which channel the oil pumped from the sump 2 is led to the bearing 4.

With this radius increase, the oil pumping to the height h₁, where said upper end 9a of the oil channel 9 is located, may occur with a lower rotation of the motor. This allows the compressor to operate with rotations lower than those conventionally required for the same oil pumping at said height h1.

Each said oil conducting channel 20 presents an oil outlet upper end opening 20a and an oil inlet lower end opening 20b, which communicate, respectively, with the stationary oil collecting means 30 and the oil inlet lower nozzle 10b of the pump rotor 10. In the illustrated constructive option the upper end opening 20a incorporates an oil pouring nozzle 23, which constantly discharges the oil to the collecting means 30 and whose construction will be described ahead.

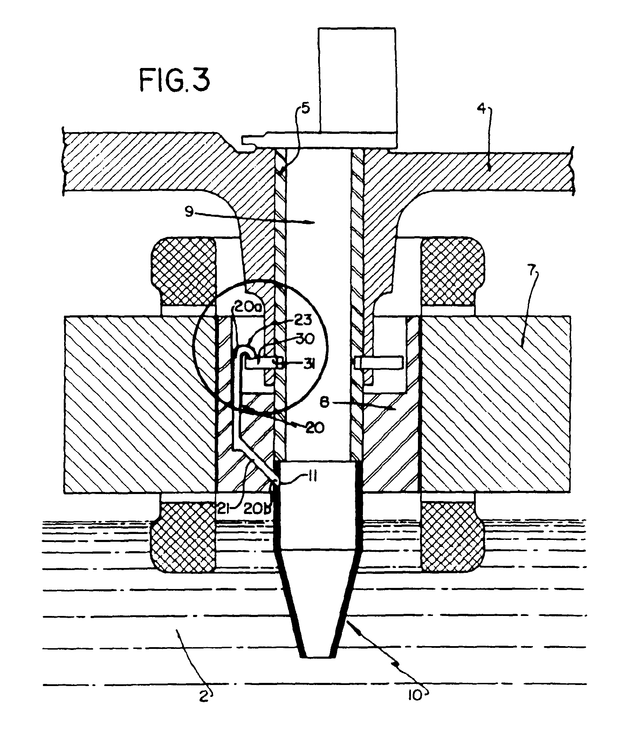

In a preferred embodiment of the present invention illustrated in figure 3, the oil conducting channel 20 comprises an inclined lower portion 21 and a median portion 22, parallel to the eccentric shaft 5, said median portion 22 occupying a substantial fraction of a height hl of the rotor 8. In this embodiment, said oil conducting channel 20 is defined at a median portion of the rotor 8 thickness. The length of said oil conducting channel 20 is defined in function of the constructive characteristics of the compressor.

Though said oil conducting channel 20 may be machined adjacently to the internal wall of the rotor 8, said wall being in contact with the external wall of the eccentric shaft 5, said solution does not result in a substantial increase in the action of the centrifugal force over the oil being pumped to the upper end 9a of the oil channel 9, because it produces an insignificant increase in the larger radius R of the oil pump.

According to this embodiment illustrated in figure 3, the rotor 8 presents, at its upper portion and from a median height, an end axial recess 40, which is concentric to the eccentric shaft 5 and which defines a housing for the oil collecting means 30.

Said axial recess 40 presents a lateral wall 41, spaced from the geometric axis of the oil pump by a distance that usually corresponds to the larger radius R.

In a constructive option of the present invention, the stationary oil collecting means 30 is in the form of an annular tray, having a profile defined in function of the space available to allow its installation adjacent to the bearing 4. Said stationary oil collecting means 30 is attached, through adequate means, to the lower portion of the bearing 4, so as not to rotate together with the eccentric shaft-rotor assembly. In this construction, the feeding means 31 is defined by an opening, which is provided at the lower end of the bearing 4 and which communicates the stationary oil collecting means 30 with an annular channel 32, defined at the external wall of the eccentric shaft 5, in order to continuously supply oil to said eccentric shaft 5 during the compressor operation. The oil that reaches the external wall of the eccentric shaft 5 is then transported to the upper and lower portions of the bearing 4, through helical grooves provided at the external surface of said eccentric shaft 5.

Another constructive alternative describes said feeding means 31 defined by a channel, which is incorporated to the stationary oil collecting means 30 and which is introduced into said opening, thereby allowing the attachment of said stationary oil collecting means 30 to the bearing 4. Said channel may alternatively just surround the eccentric shaft 5 when the end of the bearing is at a higher level.

During the operation of the compressor, the oil is centrifuged from the sump 2 to the oil conducting channel 20, running through the internal walls of the pump rotor 10, during the rotation of the eccentric shaft-rotor assembly, till reaching an oil conducting orifice 11, which is made at an upper portion of the lateral wall of said pump rotor 10 and which permanently communicates with the lower end opening 20b of the oil conducting channel 20. This permanent communication makes the pumped oil be more spaced from the geometric axis of said oil pump, thereby increasing the centrifugal force that is actuatinq over said oil and allowing the oil to reach a higher pumping height with minimum motor rotations. The oil that is being pumped is conducted to the oil pouring nozzle 23, which constantly discharges the oil to the stationary oil collecting means 30 for a temporary storage of said oil, till the oil is released to the feeding means 31 and, consequently, to the eccentric shaft 5.

Though not illustrated, both the collecting means 30 and feeding means 31 may present inclined oil conducting surfaces, so that the oil received from the oil pouring nozzle 23 can reach the eccentric shaft 5 by gravitational dragging.

The oil supplied to the collecting means 30 is constantly led to the eccentric shaft 5 through said feeding means 31 by gravitational dragging. Since said eccentric shaft 5 is rotating, this oil is conducted, by the mechanical dragging of the lubrincating grooves, to the upper end of the eccentric shaft 5 allowing the lubrication of the components even when the eccentric shaft 5 is rotating at a low speed not sufficient to keep known lubrication through the oil channel 9.

The use of a stationary collecting means 30 is necessary to avoid loss in the pumping yield, when the oil follows a path in the direction opposite to that of the centrifugal force actuating in said oil conducting channel 20.

In order to assure the lubrication of the region between the eccentric shaft 5 and bearing 4, when the feeding means 31 is positioned above the lower end of said bearing 4, at a distance from said lower end, in such a way that the oil adjacent to the opening of said feeding means 31 does not reach said end, the external surface of the eccentric shaft is provided with at of the oil through the feeding means 31 to said region of the bearing 4.

Though not illustrated, the present invention may be provided with at least one second oil conducting channel 20, machined to the body of the rotor 8, preferably opposite to the oil conducting channel 20 described above, or with a plurality of oil conducting channels 20, which are angularly spaced from each other at a balanced disposition throughout the body of the rotor 8. The number of oil conducting channels machined in the rotor 8 is defined in such a way as not to impair the rigidity of said rotor or the motor yield, which is a function of the amount of iron found in the rotor. Nevertheless, small portions of iron removed therefrom do not change significantly the rotor properties.

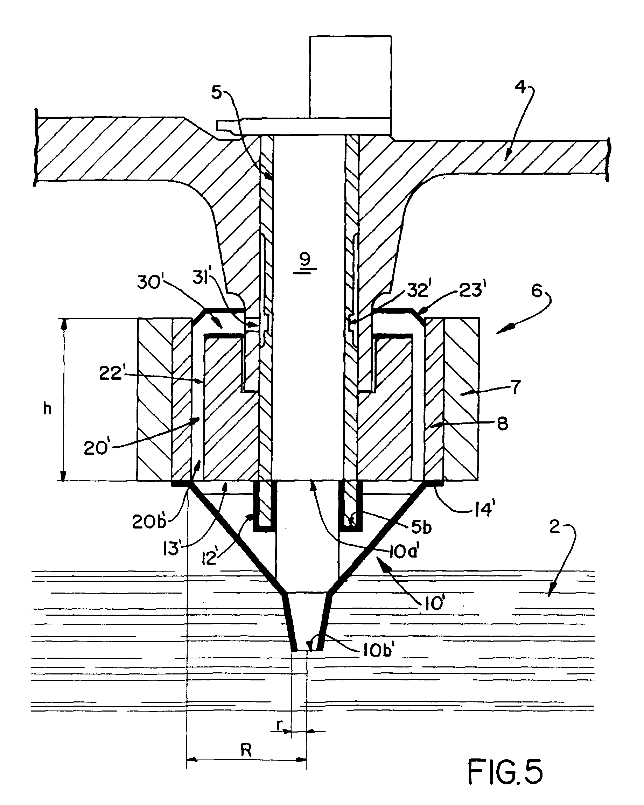

In another possible constructive option of the present invention, as illustrated in figure 5, the oil conducting channel 20' is in the form of a pair of throughbores, which are opposite to each other and which are machined in respective portions of the rotor 8 located close to the adjacent external lateral wall thereof and parallel to the eccentric shaft 5, keeping a sufficient distance from said wall, in order not to impair the integrity of the rotor 8 during the machining operation of said conducting channels. In this constructive form, the inclined portion of the oil conducting channel 20' described above is provided in a pump rotor 10', of a particular construction. Said pump rotor 10' of an inverted frusto-conical shape presents an open round upper end 10a', whose diameter is defined so as to surround the lower end opening of the oil conducting channels 20' machined in the rotor 8, thus permitting the constant fluid communication with the oil sump 2 and said oil conducting channels 20' and also with a lower nozzle 10b', immersed in the oil sump 2.

The adaptation of either of the above described pump rotors 10, 10' to the eccentric shaft-rotor assembly may be achieved in any adequate manner, such as that cited in the Brazilian patent PI 9201761. For the construction of a pump rotor such as that illustrated in figure 5, said adaptation is made by fitting an annular projection 12', concentric to the eccentric shaft 5 and surrounding a lower portion, projecting from said eccentric shaft 5, relatively to the rotor-motor assembly.

The strength of said pump rotor 10' is obtained through radial ribs 13', which communicate, internally, at least the upper nozzle 10a' of said pump rotor 10' with said annular projection 12'. In another constructive option, said communication is made through radial walls, extending from said radial ribs.

Said pump rotor 10' may further present an annular peripheral flange 14', particularly continuous and surrounding the upper end edge of said pump rotor 10', and which is seated against the lower portion of the rotor 8. Said annular flange acts as an attaching element of the pump rotor 10' to the rotor 8.

In the embodiment illustrated in figure 5, the injection of the oil, pumped through the oil conducting channel 20' towards the collecting means 30', is achieved through the provision, in each said oil conducting channel 20', of a respective oil pouring nozzle 23', in the form of an annular duct, which communicates each said oil conducting channel 20' with the collecting means 30', as described above.

Though not illustrated, it is possible to have oil conducting channels, which are machined in the rotor and which present a linear or stepped gradual radius increase, from the oil inlet lower end opening 20b' of said conducting channels.

## Claims

1. Oil pump in a variable speed hermetic compressor, of the type including: a hermetic shell (1) which defines a lubricant oil sump (2) at its bottom and which lodges therewithin a cylinder block (3), which supports a vertical eccentric shaft (5), whereto is mounted the rotor (8) of an electric motor (6), the eccentric shaft (5) being provided with at least one oil channel (9), having a lower end (9b) in fluid communication with a lower end (5b) of the eccentric shaft (5) and an upper end (9a) opened to the external part of the upper median portion of the eccentric shaft (5), at the region of the bearing (4), said eccentric shaft supporting at its lower end (5b) a pump rotor (10), which pumps the lubricant oil from the sump (2) to the open upper end (9a) of the oil channel (9), said oil pump being characterized in that it further comprises: at least one oil conducting channel (20), which is machined to the body of the rotor (8) of the electric motor (6) and which presents a lower end opening (20b) for receiving the oil centrifuged by the pump rotor (10) and an upper end opening (20a) for oil discharge to the eccentric shaft (5), said oil conducting channel (20) having at least the part of its length, that includes the upper end opening, defined at a median portion of the rotor thickness; a stationary oil collecting means (30), which is attached to the cylinder block (4) and which is provided with an annular region for receiving all the oil coming from the upper end opening (20a) of each oil conducting channel (20); and at least one lubricant oil feeding means (31) that discharges oil from the oil conducting channel to the eccentric shaft (5).

2. Oil pump, as in claim 1, characterized in that the oil conducting channel (20) presents at least a portion of its extension axially disposed through the rotor (8).

3. Oil pump, as in claim 2, characterized in that the upper end opening (20a) is disposed at an axial extension of the oil conducting channel (20) through the rotor (8).

4. Oil pump, as in claim 2, characterized in that the lower end opening (20b) is provided at an inclined lower portion (21) of the oil conducting channel (20).

5. Oil pump, as in claim 1, characterized in that the pump rotor (10, 10') presents a lower end (10b,10b') immersed in oil and an upper end (10a,10a') in fluid communication with the lower end opening (20b) of the oil conducting channel (20).

6. Oil pump, as in claim 5, characterized in that the communication between the lower end (10b') and upper end (10a') of the pump rotor (10) is made through a continuous inverted conical surface.

7. Oil pump, as in claim 1, characterized in that the upper end opening (20a) of the oil conducting channel (20) defines an oil pouring nozzle (23), which discharges the oil to the stationary oil collecting means (30).

## Patentansprüche

1. Ölpumpe in einem hermetischen Verdichter mit veränderbarer Geschwindigkeit der Art mit einem hermetischen Gehäuse (1), das einen Schmierölsumpf (2) an seinem Boden festlegt und in sich einen Zylinderblock (3) aufnimmt, der eine vertikale, exzentrische Welle (5) stützt, an der ein Rotor (8) eines elektrischen Motors (6) montiert ist, wobei die exzentrische Welle (5) mit wenigstens einem Ölkanal (9) versehen ist, der ein unteres Ende (9b) in Fluidverbindung mit einem unteren Ende (5b) der exzentrischen Welle (5) sowie ein oberes Ende (9a), das zum äußeren Teil des oberen Mittelabschnitts der exzentrischen Welle (5) im Bereich des Lagers (4) hin offen ist, wobei die exzentrische Welle an ihrem unteren Ende (5b) einen Pumpenrotor (10) trägt, der das Schmieröl aus dem Sumpf (2) zu dem offenen oberen Ende (9a) des Ölkanals (9) pumpt, wobei diese Ölpumpe dadurch **gekennzeichnet** ist, daß sie weiterhin folgendes aufweist: wenigstens einen Ölführungskanal (20), der an dem Körper des Rotors (8) des elektrischen Motors (6) ausgebildet ist und eine untere Endöffnung (20b) zur Aufnahme des von dem Pumpenrotor (10) zentrifugierten Öles sowie eine obere Endöffnung (20a) für den Ölabzug an die exzentrische Welle (5) aufweist, wobei zumindest der Teil der Länge des Ölführungskanals (20), der die obere Endöffnung umfaßt, an einem mittleren Abschnitt der Rotordicke ausgebildet ist, stationäre Ölsammelmittel (30), die an dem Zylinderblock (4) befestigt und mit einem ringförmigen Bereich zur Aufnahme all des von der oberen Endöffnung (20a) jedes Ölführungskanals (20) kommenden Öles versehen sind, und wenigstens eine Schmierölzuführungseinrichtung (31), welche das Öl aus dem Ölführungskanal zu der exzentrischen Welle (5) abzieht.

2. Ölpumpe nach Anspruch 1, dadurch gekennzeichnet, daß der Ölführungskanal (20) über seinen Verlauf wenigstens einen Abschnitt aufweist, der axial durch den Rotor (8) verläuft.

3. Ölpumpe nach Anspruch 2, dadurch gekennzeichnet, daß die obere Endöffnung (20a) an einem axialen Abschnitt des Ölführungskanals (20) durch den Rotor (8) vorgesehen ist.

4. Ölpumpe nach Anspruch 2, dadurch gekennzeichnet, daß die untere Endöffnung (20b) an einem geneigten unteren Abschnitt (21) des Ölführungskanals (20) vorgesehen ist.

5. Ölpumpe nach Anspruch 1, dadurch gekennzeichnet, daß der Pumpenrotor (10,10') ein in Öl eingetauchtes unteres Ende (10b,10b') und ein in Fluidverbindung mit der unteren Endöffnung (20b) des Ölführungskanals (20) stehendes oberes Ende (10a,10a') aufweist.

6. Ölpumpe nach Anspruch 5, dadurch gekennzeichnet, daß die Verbindung zwischen dem unteren Ende (10b') und dem oberen Ende (10a') des Pumpenrotors (10) über eine kontinuierliche, hängende konische Oberfläche gebildet wird.

7. Ölpumpe nach Anspruch 1, dadurch gekennzeichnet, daß die obere Endöffnung (20a) des Ölführungskanals (20) eine Ölgießdüse (23) festlegt, welche das Öl an die stationären Ölsammelmittel (30) abzieht.

## Revendications

1. Pompe à huile dans un compresseur hermétique à vitesse variable, du type comprenant : une enveloppe hermétique (1) qui définit une citerne (2) à huile lubrifiante en son fond et qui loge à l'intérieur un bloc de culasse (3) qui supporte un arbre excentrique vertical (5) sur lequel est monté le rotor (8) d'un moteur électrique (6), l'arbre excentrique (5) étant muni d'au moins un canal à huile (9) ayant une extrémité inférieure (9b) en communication fluidique avec une extrémité inférieure (5b) de l'arbre excentrique (5) et une extrémité supérieure (9a) ouverte sur la partie extérieure de la portion médiane supérieure de l'arbre excentrique (5), au niveau de la région du support (4), ledit arbre excentrique supportant sur son extrémité inférieure (5b) un rotor de pompe (10) qui pompe l'huile lubrifiante depuis la citerne (2) jusqu'à l'extrémité supérieure ouverte (9a) du canal à huile (9), ladite pompe à huile étant caractérisée en ce qu'elle comprend en outre : au moins un canal d'amenée de l'huile (20) qui est usiné sur le corps du rotor (8) du moteur électrique (6) et qui présente une ouverture d'extrémité inférieure (20b) pour recevoir l'huile centrifugée par le rotor de pompe (10) et une ouverture d'extrémité supérieure (20a) pour décharger l'huile vers l'arbre excentrique (5), ledit canal d'amenée de l'huile (20) ayant au moins la partie de sa longueur, qui comprend l'ouverture d'extrémité supérieure, définie au niveau d'une portion médiane de l'épaisseur du rotor ; des moyens de collecte d'huile fixes (30), qui sont fixés au bloc de culasse (4) et qui sont pourvus d'une région annulaire pour recevoir toute l'huile provenant de l'ouverture d'extrémité supérieure (20a) de chaque canal d'amenée de l'huile (20) ; et au moins un moyen d'alimentation en huile lubrifiante (31) qui décharge l'huile depuis le canal d'amenée de l'huile vers l'arbre excentrique (5).

2. Pompe à huile selon la revendication 1, caractérisée en ce que le canal d'amenée de l'huile (20) présente au moins une portion de son prolongement axialement disposée dans le rotor (8).

3. Pompe à huile selon la revendication 2, caractérisée en ce que l'ouverture d'extrémité supérieure (20a) est disposée au niveau d'un prolongement axial du canal d'amenée de l'huile (20) dans le rotor (8).

4. Pompe à huile selon la revendication 2, caractérisée en ce que l'ouverture d'extrémité inférieure (20b) est prévue au niveau d'une portion inférieure inclinée (21) du canal d'amenée de l'huile (20).

5. Pompe à huile selon la revendication 1, caractérisée en ce que le rotor de pompe (10, 10') présente une extrémité inférieure (10b, 10b') plongée dans l'huile et une extrémité supérieure (10a, 10a') en communication fluidique avec l'ouverture d'extrémité inférieure (20b) du canal d'amenée de l'huile (20).

6. Pompe à huile selon la revendication 5,caractérisée en ce que la communication entre l'extrémité inférieure (10b') et l'extrémité supérieure (10a') du rotor de pompe (10) est établie sur une surface conique continue inversée.

7. Pompe à huile selon la revendication 1, caractérisée en ce que l'ouverture d'extrémité supérieure (20a) du canal d'amenée de l'huile (20) définit une buse (23) destinée à verser l'huile, qui décharge l'huile vers les moyens de collecte d'huile fixes (30).
